# EUROPEAN PATENT APPLICATION

(11) **EP 4 385 649 A2**
(43) Date of publication of application: **19.06.2024**
(21) Application number: 23215289.2
(22) Date of filing: 08.12.2023
(51) Int. Cl.: B23D 29/02, B23D 35/00, B26B 17/02

(54) **BOLT CUTTERS**

(30) Priority: 13.12.2022 US 202263387118 P; 01.11.2023 US 202318499561
(71) Applicant: Milwaukee Electric Tool Corporation, Brookfield, WI 53005 (US)
(72) Inventor: RAMACHANDRAN SIVASUBRAMANIAN, Naveen, Wauwatosa, 53213 (US)
(74) Representative: Barker Brettell LLP

(57) **Abstract**

A cutter includes a head (15) with an upper jaw (12), a lower jaw (14) and an upper handle (18) and lower handle (16) coupled to the head (15). The upper jaw (12) includes a single cutting blade (20). The lower jaw (14) includes a pair of cutting blades (22) with a channel (64) between the pair of cutting blades (22). When the head (15) of the cutter is in a closed position, the cutting blade (20) of the upper jaw (12) is positioned in the channel (64) of the lower jaw (14).

## Description

### CROSS-REFERENCE TO RELATED PATENT APPLICATION

The present application claims the benefit of and priority to U.S. Provisional Application No. 63/387,118 filed on December 13, 2022, which is incorporated herein by reference in its entirety.

### BACKGROUND OF THE INVENTION

The present invention relates generally to the field of tools. The present invention relates specifically to a cutting tool, such as a bolt cutter, including improved cutting edges.

### SUMMARY OF THE INVENTION

One embodiment of the invention relates to a bolt cutter including a head. The head includes an upper jaw with a first cutting blade and a lower jaw with a second cutting blade and a third cutting blade. The cutter includes a lower handle coupled to the upper jaw and an upper handle coupled to the lower jaw.

Another embodiment of the invention relates to a bolt cutter including a head. The head includes an upper jaw having a first cutting blade and a lower jaw. The lower jaw has a second cutting blade, a third cutting blade, and a channel defined between the second cutting blade and the third cutting blade. The bolt cutter further includes a lower handle coupled to the upper jaw and an upper handle coupled to the lower jaw. When the bolt cutter is in a closed position, the first cutting blade is positioned within the channel between the second cutting blade and the third cutting blade.

Another embodiment of the invention relates to a cutter including a first member and a second member. The first member extends along a longitudinal axis and includes an upper jaw having an upper blade and a lower handle. The second member is coupled to the first member. The second member includes a lower jaw having a first lower blade and a second lower blade and an upper handle coupled to the lower jaw. The upper blade, the first lower blade and the second lower blade together define a cutting portion.

Additional features and advantages will be set forth in the detailed description which follows, and, in part, will be readily apparent to those skilled in the art from the description or recognized by practicing the embodiments as described in the written description included, as well as the appended drawings. It is to be understood that both the foregoing general description and the following detailed description are exemplary.

The accompanying drawings are included to provide further understanding and are incorporated in and constitute a part of this specification. The drawings illustrate one or more embodiments and, together with the description, serve to explain principles and operation of the various embodiments.

### BRIEF DESCRIPTION OF THE DRAWINGS

This application will become more fully understood from the following detailed description, taken in conjunction with the accompanying figures, wherein like reference numerals refer to like elements in which:
FIG. 1 is a front, right perspective view of a bolt cutter, according to an exemplary embodiment.
FIG. 2 is a left perspective view of the bolt cutter of FIG. 1, according to an exemplary embodiment.
FIG. 3 is a partially exploded view of a head of the bolt cutter of FIG. 1, according to an exemplary embodiment.
FIG. 4 is a right side view of the bolt cutter of FIG. 1 with the jaws in a first, open position, according to an exemplary embodiment.
FIG. 5 is a right side view of the bolt cutter of FIG. 1 with the jaw in a second, closed position, according to an exemplary embodiment.
FIG. 6 is a detailed perspective view of a head of the bolt cutters of FIG. 1 in the first, open position, according to an exemplary embodiment.
FIG. 7 is a detailed perspective view of the head of the bolt cutters of FIG. 1 in the second, closed position, according to an exemplary embodiment.
FIG. 8 is a detailed perspective view of a head of bolt cutters of in a first, open position, according to another exemplary embodiment.

### DETAILED DESCRIPTION

Referring generally to the figures, various embodiments of a cutter, shown as a bolt cutter, are shown. As discussed herein, Applicant has developed improvements to the jaw and/or cutting blade designs of a bolt cutter and more specifically to a design that provides a compact bolt cutter. In contrast to the bolt cutters discussed herein, traditional bolt cutters traditionally include a single upper and lower cutting blade and/or edge on each jaw. Applicant has developed bolt cutters with an upper cutting jaw that includes one cutting edge while the lower jaw includes two cutting edges. When the bolt cutter head is closed, the cutting edge of the upper jaw is positioned in a channel formed between the two cutting edges of the lower jaw.

Applicant believes the bolt cutters described herein allow the material and/or workpiece being cut to be cut completely (i.e., all the way through the material or workpiece) with more consistency than standard cutter jaw designs. Specifically, Applicant believes that traditional bolt cutter jaws with a single cutting edge on each jaw can become damaged (i.e., chipped, bent, deformed) such that, when the jaws are closed, the cutting edges do not meet or engage, and the material is not consistently cut all the way through. Accordingly, Applicant believes the cutting edge arrangement discussed herein provides improved lifespan for the tool (e.g., cutters may be usable for a longer time than traditional bolt cutters).

Further, the various designs discussed herein include a workpiece holding or grasping structure configured to hold the material or workpiece to be cut in place, such that the material does not slip out of the jaws as the user presses the handles of the cutter together. In a specific embodiment, the workpiece holding structure includes a curved cutout surface on the lower jaw. Applicant believes the workpiece holding structure described herein allow a user to more quickly and/or easily cut through a material or workpiece.

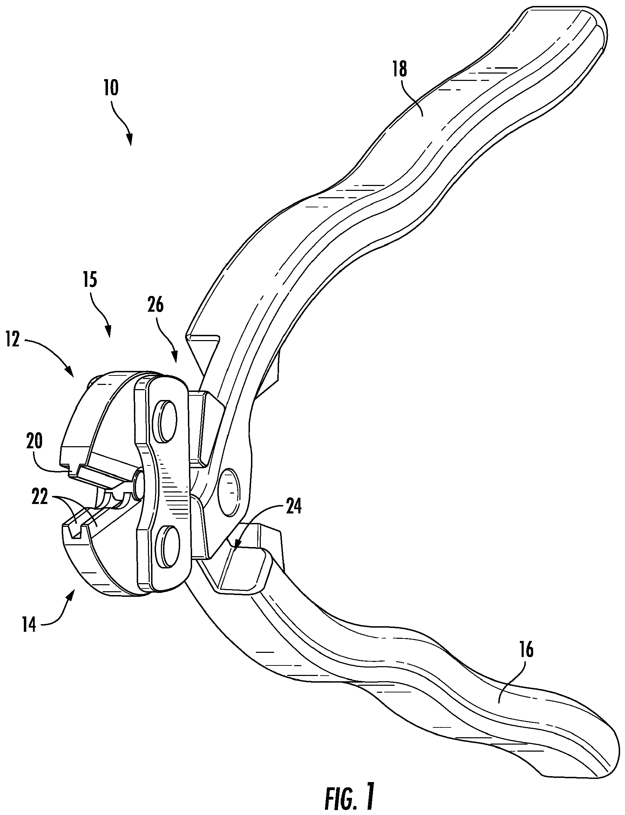

Referring to FIGS. 1-2, various aspects of a cutter or cutting tool, shown as bolt cutter 10, are shown. Although the cutting tool is described herein is a bolt cutter 10, the tool can be used to cut other objects, such as chain, locks, wood, cable, wire, etc. Bolt cutter 10 includes a head 15 with a first or upper jaw 12 and a second or lower jaw 14 that pivot relative to each other to cut a workpiece. Upper jaw 12 includes one cutting edge or blade 20. Lower jaw 14 includes a pair of cutting edges or blades 22. When head 15 of bolt cutter 10 is closed, blade 20 of the upper jaw 12 is positioned between the two blades 22 of the lower jaw 14. In a specific embodiment, blade 20 and blades 22 are formed from a metal material.

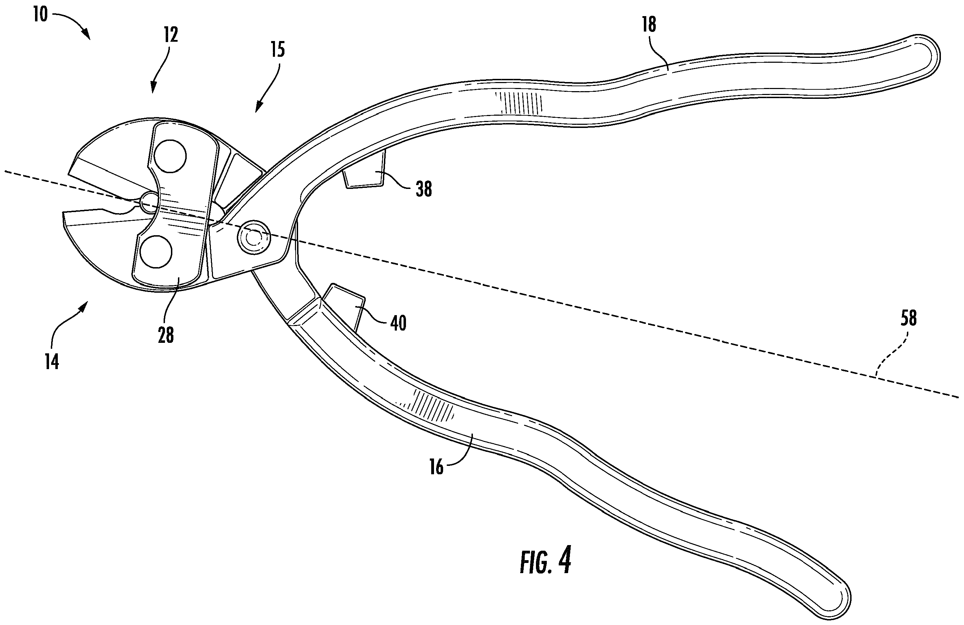

Bolt cutter 10 further includes a first or lower handle 16 coupled to upper jaw 12 and a second, or upper handle 18 coupled to lower jaw 14. In a specific embodiment, lower handle 16 is pivotally coupled to upper handle 18. In a specific embodiment, lower handle 16 and upper jaw 12 and/or upper handle 18 and lower jaw 14 are formed from single, integral and/or continuous pieces of material. In such an embodiment, lower handle 16 and upper jaw 12 form a first member and upper handle 18 and lower jaw 14 form a second member. The first member and the second member extend along a longitudinal axis (see e.g., element 58 in FIG. 4). In a specific embodiment, upper handle 18 and lower handle are formed as mirror images. Bolt cutter 10 includes a neck 25 positioned between head 15 and the handles 16, 18. In a specific embodiment, lower handle 16 includes a neck portion 27 positioned between a distal portion of the lower handle 16 and upper jaw 12. Neck portion 27 includes a recessed portion 24 (i.e., reduced width and/or depth compared to distal portion of lower handle 16). Recessed portion 24 is positioned at a proximal end of lower handle 16 adjacent to head 15.

In a specific embodiment, upper handle 18 includes a neck portion 29 positioned between a distal portion of the upper handle 18 and lower jaw 14. Neck portion 29 includes a recessed portion 26 (i.e., reduced width and/or depth compared to distal portion of upper handle 18). Recessed portion 26 is positioned at a proximal end of upper handle 18 adjacent to head 15. Recessed portion 24 of lower handle 16 is configured to receive and/or engage a portion of upper handle 18 when bolt cutter 10 is assembled. Similarly, recessed portion 26 of upper handle 18 is configured to receive and/or engage a portion of lower handle 16 when bolt cutter 10 is assembled. In other words, when bolt cutter 10 is assembled neck 25 is formed by neck portion 27 and neck portion 29 crossing over each other such that upper handle 18 is connected to lower jaw 14 and lower handle 16 is connected to upper jaw 12.

Bolt cutter 10 includes a pair of connecting plates 28. A connecting plate 28 is positioned along and/or coupled to each of the opposing side surfaces, specifically the outward facing surfaces 17 of upper jaw 12 and the opposing side surfaces or outward facing surfaces 19 of lower jaw 14 by one or more fasteners shown as pins 30. In a specific embodiment, the fasteners 30 are bolts that can be tightened or loosened to adjust the upper jaw 12 and lower jaw 14 and specifically the position of blade 20 relative to blades 22. Specifically, connecting plates 28 and pins 30 hold the blade 20 of upper jaw 12 and blades 22 of lower jaw 14 in an aligned position.

Upper handle 18 includes a projection 38 extending from an inward facing surface toward lower handle 16. Lower handle 16 includes a projection 40 extending from an inward facing surface toward upper handle 18. Projection 40 opposes projection 38. As shown in FIGS. 4-5, when bolt cutter 10 is in an open position, projection 38 of upper handle 18 and projection 40 of lower handle 16 are spaced a distance apart. When bolt cutter 10 is in a closed position, a distance between projection 38 of upper handle 18 and projection 40 of lower handle 16 is less than the distance between projection 38 and projection 40 in the open position. Projections 38, 40 act as stoppers to prevent overextension of the upper handle 18 and lower handle 16 (i.e., prevent extra friction and or grind between upper jaw 12 and lower jaw 14 and or damage to head 15).

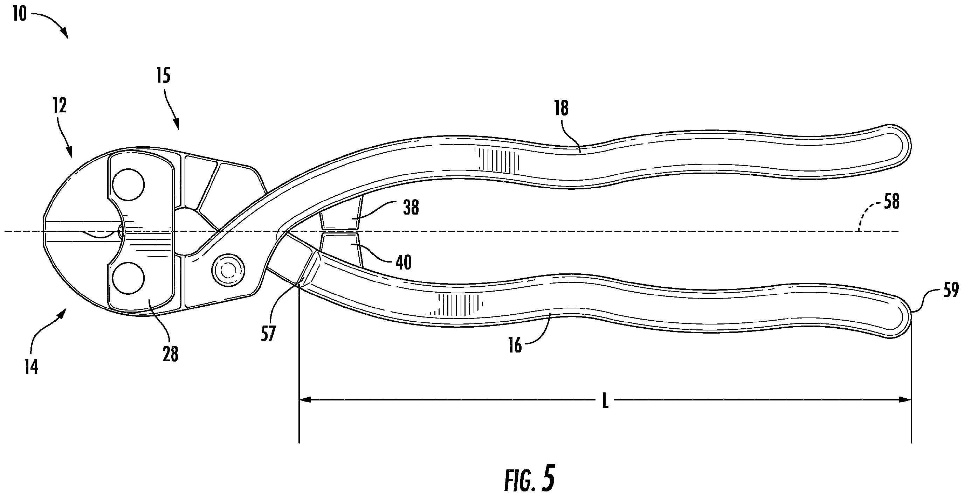

As will be discussed in greater detail below, upper jaw 12 and lower jaw 14 move about a pivot axis 32 when bolt cutter 10 moves between a first, open position (see e.g., FIG. 4) and a second, closed position (see e.g., FIG. 5). When a user pulls upper handle 18 and lower handle 16 in an outward direction (i.e., handles 16, 18 move away from each other), upper jaw 12 moves in a first direction, shown by arrow 34 while lower jaw 14 moves in a second direction different from the first direction and shown by arrow 36 such that a distance defined between blade 20 of upper jaw 12 and blades 22 of lower jaw 14 is increased. When a user pushes upper handle 18 and lower handle 16 in an inward direction (i.e., handles 16, 18 move toward each other), upper jaw 12 moves in the second direction 36 while lower jaw 14 moves in the first direction 34 such that the distance defined between blade 20 of upper jaw 12 and blades 22 of lower jaw 14 is decreased.

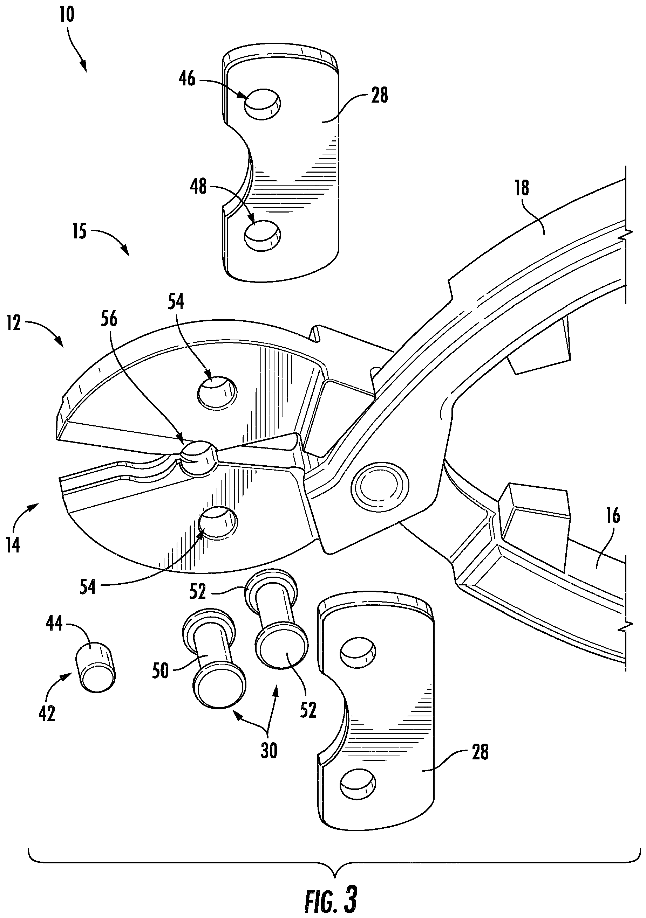

Referring to FIG. 3, a partially exploded view of head 15 of bolt cutter 10 is shown, according to an exemplary embodiment. A joint is formed at head 15 where the connecting plates 28 and pins 30 are connected to upper jaw 12 and/or lower jaw 14. Each connecting plate 28 includes a pair of bores 46, 48 that extend though the connecting plate 28. A first or upper bore 46 of each connecting plate 28 is configured to receive a portion of pin 30 such that the connecting plates are coupled to upper jaw 12. A second or lower bore 48 of each connecting plate 28 is configured to receive a portion of pin 30 such that the connecting plates 28 are coupled to lower jaw 14. Similarly, upper jaw 12 and lower jaw 14 each include a bore 54 extending though upper jaw 12 and lower jaw 14 respectively. Each bore 54 is configured to receive a portion of a pin 30 and each bore 54 is aligned with at least one of upper bore 46 and lower bore 48 when head 15 of bolt cutter 10 is assembled.

Each pin 30 includes a middle section 50 positioned between opposing end sections 52. The middle section 50 of the pin 30 has a dimension that is less than a dimension of the opposing end sections 52. In a specific embodiment, middle section 50 has a diameter that is less than a diameter of opposing end sections 52. Head 15 further includes a support component, shown as a bearing 42. Bearing 42 fits within an opening or space 56 defined between upper jaw 12 and lower jaw 14. Bearing 42 extends along and is generally parallel to pivot axis 32. In a specific embodiment, bearing 42 is centered on pivot axis 32. Bearing 42 includes an outer surface 44 that engages with upper jaw 12 and/or lower jaw 14 as the jaws 12, 14 open and/or close. In a specific embodiment, bearing 42 has a cylindrical shape.

Referring to FIGS. 4-5, side views of bolt cutter 10 in an open and closed position are shown, according to an exemplary embodiment. FIG. 4 shows upper jaw 12 and lower jaw 14 when bolt cutter 10 is in the first, open position. A longitudinal axis 58 of bolt cutter 10 extends between upper handle 18 and lower handle 16 and between upper jaw 12 and lower jaw 14. Longitudinal axis 58 is generally perpendicular (e.g., 90 degrees plus or minus 10 degrees) to pivot axis 32. In order to cut a workpiece and/or material, a user places the workpiece and/or material between upper jaw 12 and lower jaw 14. When a user pushes and/or squeezes upper handle 18 and lower handle 16 in an inward direction (i.e., toward longitudinal axis 58) upper jaw 12 will move toward lower jaw 14 such that blade 20 of upper jaw 12 is at least partially positioned between blades 22 of lower jaw 14 cutting through the workpiece and/or material.

As shown in FIG. 5, when no workpiece or material is positioned between upper jaw 12 and lower jaw 14, blade 20 of upper jaw 12 is positioned and/or extends between blades 22 of lower jaw 14 such that bolt cutter 10 is in a second, closed position. A proximal end surface 57 of lower handle 16 is positioned between head 15 and an opposing distal end surface 59. A length, L of lower handle 16 is defined between proximal end surface 57 and distal end surface 59. Upper handle 18 has a length that is the same as length L.

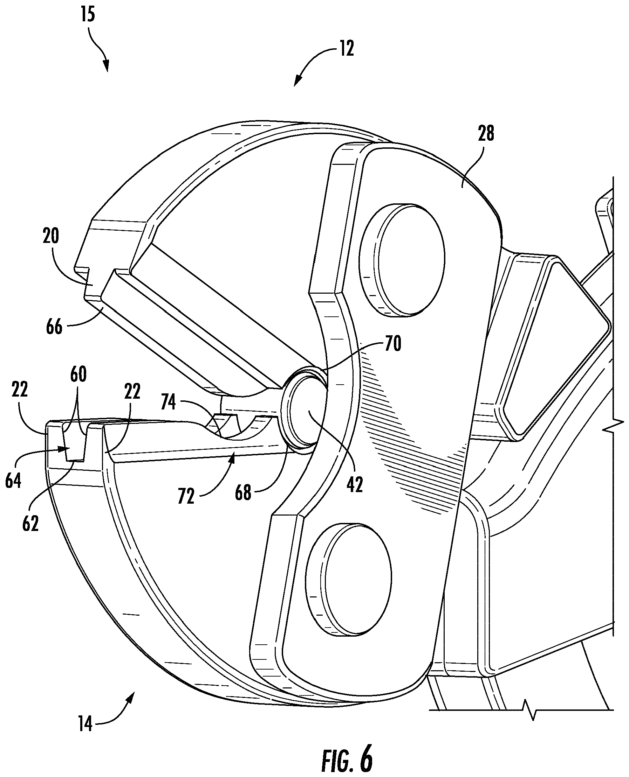

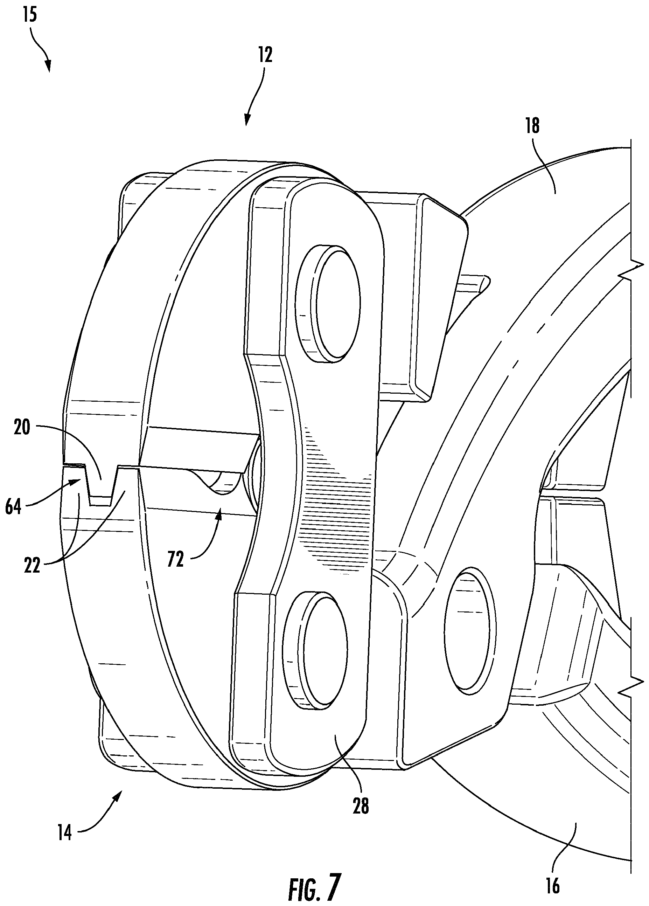

Referring to FIGS. 6-7, a detailed perspective view of a head 15 of the bolt cutter 10 in the first, open position and second, closed position are shown according to an exemplary embodiment. Lower jaw 14 further includes inward facing surfaces 60 positioned on each of the blades 22. An upward facing surface 62 connects the pair of inward facings surfaces 60. Upward facing surface 62 and the pair of inward facing surfaces 60 together define a channel 64. Channel 64 extends along longitudinal axis 58 and receives blade 20 of upper jaw 12 when bolt cutter 10 is in the closed position (see e.g., FIG. 7). In other words, when head 15 is in a closed position, blade 20 contacts, interfaces against, and/or engages the upward facing, bottom surface of the channel 64. Blade 20 of upper jaw 12 includes an outer cutting surface 66 that engages with the workpiece and/or material that is being cut.

Lower jaw 14 includes a workpiece holding structure shown as cutout portion 72 positioned between each blade 22 and upper handle 18. Cutout portion 72 is configured to receive and/or hold the material or workpiece to be cut in place, such that the material does not slip out of the jaws 12, 14 as the user presses the handles 16, 18 of bolt cutter 10 together. In other words, the cutout portion 72 is configured to receive a portion of the workpiece and resist movement of the workpiece out of a position between the lower jaw 14 and the upper jaw 12. Each cutout portion 72 includes a surface, shown as curved surface 74 that engages with material and/or workpiece to be cut. Curved surface 74 is concave relative to upper jaw 12 and located between blades 22 and pivot axis 32. Curved surface 72 has a longitudinal length less than a longitudinal length of lower jaw 14. As discussed above, Applicant believes cutout portion 72 holds the material or workpiece to be cut in place, such that the material does not slip out of the jaws 12, 14 during cutting allowing for a faster and easier cutting process.

Upper jaw 12 further includes a curved or recessed section 70 positioned behind (i.e., distal from blade 20) that at least partially defines opening or space 56. Lower jaw 14 includes a curved or recessed section 68 positioned behind (i.e., distal from blades 22) that at least partially defines opening or space 56. Curved sections 68, 70 engage with outer surface 44 of bearing 42.

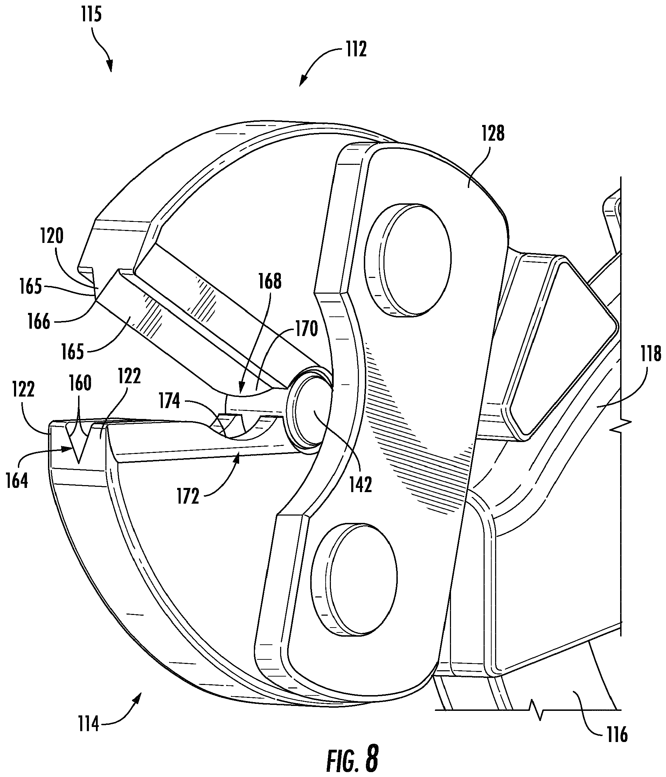

Referring to FIG. 8, various aspects of a head 115 that can be utilized with a cutting tool such as bolt cutter 10 is shown according to another exemplary embodiment. Head 115 is substantially the same as head 15 except for the differences discussed herein. Head 115 includes a first or upper jaw 112 and a second or lower jaw 114 that pivot relative to each other to cut a workpiece. Upper jaw 112 includes one cutting edge or blade 120. Lower jaw 114 includes a pair of cutting edges or blades 122. When head 115 of the bolt cutter is closed, blade 120 of the upper jaw 112 is positioned between the two blades 122 of the lower jaw 114. Applicant believes that in comparison to traditional bolt cutter jaws with a single cutting blade on each jaw, the relative positioning of blade 120 of upper jaw 112 and blades 122 of lower jaw 114 provides improved engagement between blade 120 and blades 122 such that the material to be cut is more consistently cut all the way through.

Blade 120 includes an outer cutting surface or edge 166 that is pointed. In a specific embodiment, blade 120 includes a triangular cross-sectional shape. Specifically, blade 120 includes generally planar side surfaces 165. The generally planar side surfaces 165 are angled relative to each other such that they taper to a sharp point.

A channel 164 of lower jaw 114 receives blade 120 of upper jaw 112 when bolt cutter head 115 is in a closed position. Lower jaw 114 and specifically channel 164 further includes inward facing surfaces 160 positioned on each of the blades 122. In a specific embodiment, inward facing surfaces 160 connect at a point. In other words, channel 164 has a shape that corresponds to a shape of the blade 120. In various specific embodiments, blade 120 is a triangular prism and channel 164 has a corresponding shape to allow blade 120 to be received within channel 164.

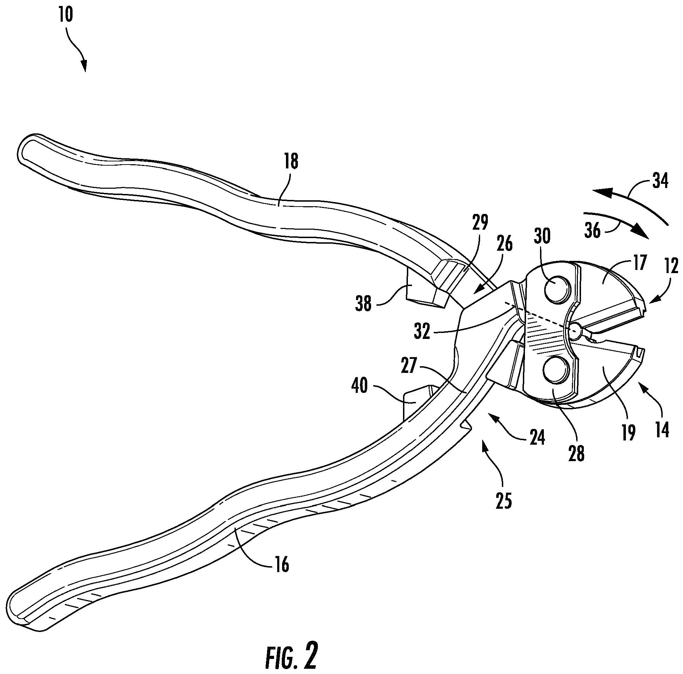

Lower jaw 114 includes a cutout portion 172 positioned between each blade 122 and upper jaw 112. Cutout portion 172 is configured to receive and/or hold the material or workpiece to be cut in place, such that the material does not slip out of the jaws 112, 114 as the user presses the handles 116, 118 of the bolt cutter together. Each cutout portion 172 includes a surface, shown as curved surface 174 that engages with material and/or workpiece to be cut. Curved surface 174 is concave relative to upper jaw 112 and located between blades 122 and a pivot axis (see e.g., 32 in FIG. 2). Curved surface 172 has a longitudinal length less than a longitudinal length of lower jaw 114. As discussed above, Applicant believes cutout portion 172 holds the material or workpiece to be cut in place, such that the material does not slip out of the jaws 112, 114 during cutting allowing for a faster and easier cutting process.

Blade 120 further includes a curved portion 168 with a surface shown as curved surface 170. In a specific embodiment, curved surface 170 is convex relative to lower jaw 114. When bolt cutter head 115 is in the closed position, curved portion 168 of blade 120 is positioned between the curved surfaces 174 of lower jaw 114.

It should be understood that the figures illustrate the exemplary embodiments in detail, and it should be understood that the present application is not limited to the details or methodology set forth in the description or illustrated in the figures. It should also be understood that the terminology is for the purpose of description only and should not be regarded as limiting.

Further modifications and alternative embodiments of various aspects of the invention will be apparent to those skilled in the art in view of this description. Accordingly, this description is to be construed as illustrative only. The construction and arrangements, shown in the various exemplary embodiments, are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. Some elements shown as integrally formed may be constructed of multiple parts or elements, the position of elements may be reversed or otherwise varied, and the nature or number of discrete elements or positions may be altered or varied. The order or sequence of any process, logical algorithm, or method steps may be varied or re-sequenced according to alternative embodiments. Other substitutions, modifications, changes and omissions may also be made in the design, operating conditions and arrangement of the various exemplary embodiments without departing from the scope of the present invention.

For purposes of this disclosure, the term "coupled" means the joining of two components directly or indirectly to one another. Such joining may be stationary in nature or movable in nature. Such joining may be achieved with the two members and any additional intermediate members being integrally formed as a single unitary body with one another or with the two members or the two members and any additional member being attached to one another. Such joining may be permanent in nature or alternatively may be removable or releasable in nature.

While the current application recites particular combinations of features in the claims appended hereto, various embodiments of the invention relate to any combination of any of the features described herein whether or not such combination is currently claimed, and any such combination of features may be claimed in this or future applications. Any of the features, elements, or components of any of the exemplary embodiments discussed above may be used alone or in combination with any of the features, elements, or components of any of the other embodiments discussed above.

In various exemplary embodiments, the relative dimensions, including angles, lengths and radii, as shown in the Figures are to scale. Actual measurements of the Figures will disclose relative dimensions, angles and proportions of the various exemplary embodiments. Various exemplary embodiments extend to various ranges around the absolute and relative dimensions, angles and proportions that may be determined from the Figures. Various exemplary embodiments include any combination of one or more relative dimensions or angles that may be determined from the Figures. Further, actual dimensions not expressly set out in this description can be determined by using the ratios of dimensions measured in the Figures in combination with the express dimensions set out in this description.

## Claims

1. A bolt cutter comprising:
a head, the head comprising:
an upper jaw comprising a first cutting blade; and
a lower jaw comprising:
a second cutting blade; and
a third cutting blade;
a lower handle coupled to the upper jaw; and
an upper handle coupled to the lower jaw.

2. The bolt cutter of claim 1, the lower jaw further comprising a channel defined between the second cutting blade and the third cutting blade such that the second cutting blade is spaced from the third cutting blade.

3. The bolt cutter of claim 2, wherein, when the head is in a closed position, the first cutting blade is positioned in the channel between the second cutting blade and the third cutting blade.

4. The bolt cutter of claim 2, wherein, when the head is in a closed position, the first cutting blade contacts a bottom surface of the channel.

5. The bolt cutter of claim 1, the lower jaw further comprising a first cutout portion positioned between the second cutting blade and the upper handle and a second cutout portion positioned between the third cutting blade and the upper handle.

6. The bolt cutter of claim 5, wherein the first cutout portion and the second cutout portion are configured to receive a portion of a workpiece and resist movement of the workpiece out of a position between the lower jaw and the upper jaw.

7. The bolt cutter of claim 1, further comprising a connecting plate coupled to each opposing side surface of both the upper jaw and the lower jaw by one or more fasteners.

8. The bolt cutter of claim 7, wherein the one or more fasteners are adjustable such that a position of the first cutting blade relative to the second cutting blade and the third cutting blade can be adjusted.

9. A bolt cutter comprising:
a head, the head comprising:
an upper jaw comprising a first cutting blade; and
a lower jaw comprising:
a second cutting blade;
a third cutting blade; and
a channel defined between the second cutting blade and the third cutting blade;
a lower handle coupled to the upper jaw; and
an upper handle coupled to the lower jaw;
wherein, when the bolt cutter is in a closed position, the first cutting blade is positioned within the channel between the second cutting blade and the third cutting blade.

10. The bolt cutter of claim 9, further comprising a workpiece holding structure positioned on the lower jaw.

11. The bolt cutter of claim 10, wherein the workpiece holding structure is a curved cutout surface.

12. The bolt cutter of claim 11, wherein the curved cutout surface is concave relative to the upper jaw.

13. The bolt cutter of claim 11, wherein the curved cutout surface has a first longitudinal length and the lower jaw has a second longitudinal length, and wherein the first longitudinal length is less than the second longitudinal length.

14. The bolt cutter of claim 9, the head further comprising a bearing positioned within an opening defined between the upper jaw and the lower jaw.

15. The bolt cutter of claim 9, wherein the lower jaw and the upper handle and the upper jaw and the lower handle are each formed from a single, integral piece of material.

16. A cutter comprising:
a first member extending along a longitudinal axis, the first member comprising:
an upper jaw comprising:
an upper blade; and
a lower handle; and
a second member coupled to the first member, the second member comprising:
a lower jaw, the lower jaw comprising:
a first lower blade; and
a second lower blade;
an upper handle coupled to the lower jaw;
wherein the upper blade, the first lower blade, and second lower blade together define a cutting portion.

17. The cutter of claim 16, further comprising:
a first neck portion positioned between a distal portion of the lower handle and the upper jaw; and
a second neck portion positioned between a distal portion of the upper handle and the lower jaw, the second neck portion crossing over the first neck portion to define a neck.

18. The cutter of claim 16, further comprising a workpiece holding structure, wherein the workpiece holding structure is configured to receive a portion of a workpiece and resist movement of the workpiece out of a position between the lower jaw and the upper jaw.

19. The cutter of claim 16, wherein the upper blade has a triangular cross-sectional shape.

20. The cutter of claim 16, wherein the first member and the second member are each formed from a single, integral piece of material.
